# EUROPÄISCHE PATENTSCHRIFT

(11) **EP 4 110 665 B1**
(45) Veröffentlichungstag und Bekanntmachung des Hinweises auf die Patenterteilung: **08.05.2024**
(21) Anmeldenummer: 21706836.0
(22) Anmeldetag: 11.02.2021
(51) Int. Cl.: B60T 17/02, B60T 13/72

(54) **VAKUUMVERSTÄRKTES BREMSSYSTEM MIT REDUNDANZ**
VACUUM-BOOSTED BRAKING SYSTEM HAVING REDUNDANCY
SYSTÈME DE FREINAGE ASSISTÉ PAR DÉPRESSION À REDONDANCE

(30) Priorität: 26.02.2020 DE 102020202440; 15.05.2020 DE 102020206179
(43) Veröffentlichungstag der Anmeldung: 04.01.2023
(73) Patentinhaber: Continental Automotive Technologies GmbH, 30175 Hannover (DE)
(72) Erfinder: ULLRICH, Thorsten, 60488 Frankfurt am Main (DE); TOTH, Tibor, 60488 Frankfurt am Main (DE); KRAFT, Martin, 60488 Frankfurt am Main (DE); LIEBL, Manfred, 60488 Frankfurt am Main (DE); ZIELKE, Bernd, 60488 Frankfurt am Main (DE); DAFFNER, Stefan, 60488 Frankfurt am Main (DE); CENUSE, Andreea, 60488 Frankfurt am Main (DE)
(74) Vertreter: Continental Corporation
(86) Internationale Anmeldenummer: PCT/DE2021/200013
(87) Internationale Veröffentlichungsnummer: WO 2021/170184

(56) Entgegenhaltungen:
- WO-A1-2007/042561
- DE-A1- 19 542 654
- DE-A1- 19 859 072
- DE-A1-102011 077 107
- US-A1- 2012 141 299

## Beschreibung

Die Erfindung betrifft ein hydraulisches Bremssystem aufweisend einen Vakuumbremskraftverstärker sowie ein ESC-System mit einer hydraulischen Pumpe zur radindividuellen Bremskrafterzeugung in mehreren Radbremsen, einem ESC-Steuergerät zur Ansteuerung der hydraulischen Pumpe sowie einen hydraulischen Drucksensor zur Ermittlung eines Hydraulikdrucks in dem hydraulischen Bremssystem.

Durch die Elektrifizierung der Antriebe von Kraftfahrzeugen und die damit verbundene völlige Umstrukturierung derselben, ergeben sich auch neue Anforderungen an deren Bremssysteme. Bei hybridelektrischen sowie in besonderer Weise bei vollelektrischen Antrieben steht insbesondere kein Unterdruck als Hilfsenergie für die Bremskraftverstärkung zur Verfügung.

Darüber hinaus bleiben die Anforderungen an das Bremssystem bezüglich der Realisierung von Fahrerassistenzfunktionen und Sicherheitsfunktionen bestehen.

Eine Lösung mit einer elektrische Vakuumpumpe ist aus der DE 195 42 654 A1 bekannt. Diese Bremsanlage umfasst ein Bremspedal mit einer Bremsdruckgebereinheit, welche über einen pneumatischen Bremskraftverstärker verstärkt wird, der durch eine elektrische Vakuumpumpe versorgt wird. Deren Motior ist außerdem mit einer hydraulischen Pumpe verbunden, die ebenfalls hydraulischen Bremsdruck in der Bremsanlage aufbauen kann.

Auf dem Markt der elektronischen Bremssysteme sind weitere Lösungen für diese Anforderungen bekannt. Beispielsweise kann der konventionelle Unterdruckbremskraftverstärker durch einen elektrischen Bremskraftverstärker ersetzt und damit die Unabhängigkeit von einer Unterdruckversorgung erreicht werden.

Ebenso kann ein integriertes Simulatorbremssystem (brake-by-wire) eingesetzt werden, um die Anforderungen elektrifizierter Fahrzeuge zu erfüllen. Ein Simulatorbremssystem bietet zudem eine besonders hohe Effizienz bei regenerativem Bremsen.

Beide Architekturen, sowohl der elektrische Bremskraftverstärker als auch das integrierte Simulatorbremssystem, sind jedoch mit erheblichen Mehrkosten gegenüber konventionellen Bremssystemen mit Vakuumbremskraftverstärker verbunden.

Es ist somit Aufgabe der vorliegenden Erfindung eine Bremssystemarchitektur anzugeben, die die Anforderungen elektrifizierter Fahrzeuge mit wesentlich geringeren Kosten erfüllt.

Die Aufgabe wird gelöst durch ein Bremssystem gemäß Anspruch 1, indem eine elektrische Vakuumpumpe zur Versorgung des Vakuumbremskraftverstärkers vorgesehen ist, wobei das ESC-Steuergerät dazu eingerichtet ist, die elektrische Vakuumpumpe logisch und elektrisch anzusteuern.

Ein ESC-System (Stabilitätskontrolle oder Fahrdynamikregelung) ist ein elektronisch gesteuertes Fahrerassistenzsystem für Kraftfahrzeuge, das durch gezieltes Abbremsen einzelner Räder dem Ausbrechen des Fahrzeugs entgegenwirkt. Dazu weist das System eine hydraulische Pumpe auf, mit der unabhängig vom Fahrer ein Bremsdruck in dem Bremssystem aufgebaut werden kann. Durch entsprechende Ansteuerung von meist vorhandenen Hydraulikventilen in dem Bremssystem wird der durch die hydraulischen Pumpe erzeugte Bremsdruck auf die jeweilig abzubremsenden Radbremsen verteilt.

Der Vakuumbremskraftverstärker ist üblicherweise im Kraftfahrzeug zwischen einem Bremspedal und einem Hauptbremszylinder angeordnet, der die Bremsflüssigkeit in das Leitungssystem des Bremssystems zu den einzelnen Radbremsen drückt. Dieser weist in einer einfachen Variante eine Arbeitsmembran auf, welche eine Arbeitskammer von einer Unterdruckkammer trennt, die in Ruhestellung beide unter Unterdruck stehen. Durch die Betätigung des Bremspedals wird über ein Ventil die pedalgerichtete Seite der Membran, die Arbeitskammer, mit atmosphärischem Druck beaufschlagt, sodass aufgrund der dann herrschenden Druckdifferenz eine Kraft entsteht, die die am Pedal aufgebrachte Kraft in gleicher Richtung unterstützt.

Zum Erzeugen des Unterdrucks wird erfindungsgemäß eine elektrische Vakuumpumpe verwendet, deren logische Ansteuerung, d. h. die Regelung der Vakuumpumpe, insbesondere bezüglich des Einschaltens, Ausschaltens, der Drehzahl und/oder der Leistung, von dem ESC-Steuergerät übernommen wird. Auch die elektrische Ansteuerung, also die Energieversorgung der Vakuumpumpe, wird direkt über das ESC-Steuergerät bereitgestellt.

Dies hat für den Hersteller des Fahrzeugs den Vorteil, dass keine externen Schaltbausteine, wie etwaige Relais, notwendig sind, die in die elektrische Architektur des Fahrzeugs integriert werden müssten. Somit können die Kosten des Fahrzeugs gesenkt werden. Zudem erlaubt die Integration der elektrischen Ansteuerung der Vakuumpumpe erweiterte Diagnosemöglichkeiten, beispielsweise zur Abriss- oder Kurzschlusserkennung sowie eine sichere Abschaltung der Pumpe im Fehlerfall.

Erfindungsgemäß weist das ESC-Steuergerät zwei Steuereinheiten mit je einem eigenem Prozessor auf, wobei die beiden Steuereinheiten dazu eingerichtet sind, im Normalbetrieb je einen Teil der Funktionen des ESC-Steuergeräts durchzuführen. Die erste und zweite Steuereinheit sind in einem gemeinsamen Gehäuse, nämlich dem des ESC-Systems, untergebracht. Das Gehäuse kann mit einem gemeinsamen oder alternativ mit zwei separaten Steckern zur Herstellung der elektrischen Anschlüsse ausgestattet sein. Zur Umsetzung einer Redundanz kann im Fehlerfall einer der Steuereinheiten, zumindest ein Teil derer jeweiligen Funktionen von der jeweils anderen Steuereinheit übernommen werden. Dadurch ist eine hohe Ausfallsicherheit gegeben, wie sie insbesondere beim teilautonomen Fahren benötigt wird.

Erfindungsgemäß sind im Normalbetrieb auf einer ersten Steuereinheit die Funktionen zur Radschlupfregelung und/oder eines Stabilitätsprogramms implementiert. Dies beinhaltet insbesondere die Ansteuerung der hydraulischen Pumpe, das Schalten von Hydraulikventilen, die Erfassung des hydraulischen Drucksensors und/oder der Erfassung von Gierraten- und Beschleunigungssensoren.

In einer weiteren bevorzugten Ausführungsform der Erfindung sind im Normalbetrieb auf einer zweiten Steuereinheit die Funktionen zur Ansteuerung der Vakuumpumpe implementiert. Somit kann auch bei Ausfall der ersten Steuereinheit mit den darauf implementierten Funktionen eine Bremskraftverstärkung mittels des Vakuumbremskraftverstärkers und der Vakuumpumpe sichergestellt werden.

In einer weiteren bevorzugten Ausführungsform der Erfindung weist der Vakuumbremskraftverstärker einen Vakuumsensor auf, welcher mit dem ESC-Steuergerät, insbesondere der zweiten Steuereinheit, verbunden ist, wobei das ESC-Steuergerät, insbesondere die zweite Steuereinheit, dazu eingerichtet ist, die Vakuumpumpe basierend auf den Daten des Vakuumsensors anzusteuern. Zudem ist es möglich, weitere Signale, die dem ESC System standardmäßig zur Verfügung stehen, etwa die Raddrehzahlsensorsignale zur Bestimmung der Fahrzeuggeschwindigkeit, in die Ansteuerstrategie der elektrischen Vakuumpumpe einzubeziehen.

In einer weiteren bevorzugten Ausführungsform der Erfindung ist die zweite Steuereinheit dazu eingerichtet, bei Ausfall der Funktionen zur Erfassung des Vakuumsensors, das heißt insbesondere, des Vakuumsensors selbst, der Übertragungsstrecke und/oder der Auswerteelektronik, eine erste Rückfallebene zu aktivieren, um auf das Fehlen der Informationen über den Vakuumbremskraftverstärker zu reagieren. In dieser Rückfallebene wird bei Vorliegen einer Bremsung die Vakuumpumpe aktiviert. Die Vakuumpumpe kann nur beim Einleiten einer Bremsung und/oder bei einer Erhöhung des Bremsdrucks für eine vorgegebene Zeit aktiviert sein, da bei konstantem Bremsdruck keine weitere Luft in den Vakuumbremskraftverstärker eingesaugt wird, welche durch die Vakuumpumpe abgesaugt werden müsste. Zur Sicherheit kann die Vakuumpumpe jedoch auch während des gesamten Bremsvorgangs, insbesondere mit einer vorgegebenen Nachlaufzeit, aktiviert werden. Dabei ist die erste Steuereinheit dazu eingerichtet, das Vorliegen einer Bremsung durch Auswertung der Daten des hydraulischen Drucksensors festzustellen und über eine Kommunikationsverbindung an die zweite Steuereinheit zu übermitteln. Somit profitiert diese erste Rückfallebene von der Implementierung der Ansteuerung der Vakuumpumpe durch das ESC-Steuergerät, da die notwendige Erkennung einer Bremsung innerhalb des ESC-Steuergeräts erfolgen kann und nicht über einen Fahrzeugbus mit seinen wesentlich höheren Übertragungszeiten kommuniziert werden muss.

In einer weiteren bevorzugten Ausführungsform der Erfindung ist das ESC-Steuergerät dazu eingerichtet, bei Ausfall der Vakuumpumpe eine Bremskraftverstärkung mittels der hydraulischen Pumpe durchzuführen. Ein Ausfall der Vakuumpumpe kann die Mechanik und Elektronik selbst und/oder deren Ansteuerung betreffen. Insbesondere ist die erste Steuereinheit dazu eingerichtet, bei Ausfall der Vakuumpumpe und/oder der ganzen zweiten Steuereinheit eine Bremskraftverstärkung mittels der hydraulischen Pumpe durchzuführen. Somit kann durch die Implementierung der Vakuumpumpensteuerung in das ESC-Steuergerät dieses bei einem Ausfall redundant eine Bremskraftverstärkung durchführen.

In einer besonders bevorzugten Ausführungsform der Erfindung ist das ESC-Steuergerät dazu eingerichtet, einen Aussteuerpunkt des Vakuumbremskraftverstärkers aus Daten des Vakuumsensors zu ermitteln. Dazu kann in dem ESC-Steuergerät, insbesondere in der ersten Steuereinheit, eine entsprechende Kennlinie des Vakuumbremskraftverstärkers hinterlegt sein, welche den vorherrschenden Unterdruck, wie er vom Vakuumsensor gemessen werden kann, mit dem Aussteuerpunkt in Verbindung setzt. Außerdem ist das ESC-Steuergerät für eine Erkennung der Erschöpfung des Vakuumbremskraftverstärkers eingerichtet. Dies geschieht durch Vergleich des Hydraulikdrucks, wie er von dem hydraulischen Drucksensor bestimmt wird, mit dem Aussteuerpunkt. Ist der Hydraulikdruck größer als der Aussteuerpunkt, so ist der Vakuumbremskraftverstärker erschöpft und der den Aussteuerpunkt übersteigende Teil des Drucks wird unverstärkt von dem Fahrer generiert. Im Falle der Erschöpfung wird dann eine Bremskraftverstärkung mittels der hydraulischen Pumpe durchgeführt. Neben der Aktivierung der Hydraulikpumpe werden die Hydraulikventile derart angesteuert, dass der Druck der hydraulischen Pumpe an die Radbremsen geleitet wird. Somit steht neben der Bremskraftverstärkung durch den Unterdruckbremskraftverstärker eine Rückfallebene zur Verfügung. Diese wird bei Ausfall der elektrischen Vakuumpumpe oder deren Ansteuerschaltung im ESC-System oder bei einer Unterdruckleckage und einem dadurch verursachten Unterdruckverlust in der Unterdruckkammer des Vakuumbremskraftverstärkers, aktiviert.

In einer weiteren bevorzugten Ausführungsform der Erfindung ist das ESC-Steuergerät dazu eingerichtet zur Bremskraftverstärkung einen Verstärkungsdruck mittels der hydraulischen Pumpe zu erzeugen. Die Höhe des eingestellten Verstärkungsdrucks berechnet sich aus der Differenz zwischen dem Hydraulikdruck und dem Aussteuerpunkt multipliziert mit einem Verstärkungsfaktor. Dieser kann in dem ESC Steuergerät gespeichert sein uns beispielsweise zwischen 1 und 10, bevorzugt 2 und 8, besonders bevorzugt 3 und 5 liegen.

In einer weiteren bevorzugten Ausführungsform der Erfindung ist das ESC-Steuergerät dazu eingerichtet, bei Ausfall des Vakuumsensors und der Vakuumpumpe den Wert des Aussteuerdrucks zur Bestimmung des Verstärkungsdrucks auf 0 bar zu setzen, wobei der Verstärkungsfaktor reduziert wird. Das heißt es gibt zumindest zwei verschiedene Verstärkungsfaktoren, die in dem ESC-Steuergerät hinterlegt sind. Bei Ausfall der Vakuumsensorik, das heißt bei unbekanntem tatsächlichen Aussteuerpunkt, wird ein kleinerer Verstärkungsfaktor verwendet als bei bekanntem Aussteuerpunkt. Somit wird verhindert, dass die Bremse überproportional scharf reagiert, falls durch eine noch vorhandene Verstärkung des Vakuumbremskraftverstärkers eine doppelte Bremskraftverstärkung durchgeführt wird. Beispielsweise kann ein Verstärkungsfaktor von 4 auf 3 reduziert werden.

In einer weiteren bevorzugten Ausführungsform der Erfindung ist das ESC-Steuergerät dazu eingerichtet bei einer Bremsung den reduzierten Verstärkungsfaktor anzuheben, bis der Ursprungswert wieder erreicht ist. Beispielsweise kann zum Beginn einer Bremsung, wenn das Bremspedal aus der Ruhestellung bewegt wird und/oder der Bremsdruck einen Schwellwert übersteigt der Verstärkungsfaktor angehoben werden. Insbesondere kann der Verstärkungsfaktor am Ende beziehungsweise nach einer Bremsung, beispielsweise wenn ein Schwellwert des Bremsdrucks unterschritten wird, angepasst werden. Dabei kann die Anhebung jeweils nur teilweise erfolgen, sodass erst nach einer vorbestimmten Anzahl von Bremsungen der Ursprungswert wieder erreicht wird. Auch kann der Verstärkungsfaktor bei einer Reduktion des Bremsdrucks erhöht werden.

In einer weiteren bevorzugten Ausführungsform der Erfindung ist das ESC-Steuergerät dazu eingerichtet, bei Ausfall des Vakuumsensors und der Vakuumpumpe den Wert des Aussteuerdrucks zur Bestimmung des Verstärkungsdrucks aus dem letzten bekannten Messwert des Vakuumsensors zu bestimmen, wobei bei jeder Bremsung eine Abnahme des Aussteuerpunkts anhand des in dieser Bremsung maximal erreichten Hydraulikdrucks berechnet wird und der Aussteuerpunkt entsprechend reduziert wird. Da der Unterdruck in dem Vakuumbremskraftverstärker bis auf kleine Leckagen konstant bleiben sollte und nur bei der Durchführung einer Bremsung ein bremsdruckabhängiger Teil des Unterdrucks verbraucht wird, führt eine solche Anpassung des Aussteuerdrucks zu einer guten Schätzung der Realität. Entsprechend wird die Bremskraftverstärkung besonders genau eingestellt. Zur Bestimmung der nötigen Anpassung des Aussteuerpunkts kann in dem Steuergerät ein entsprechendes Modell hinterlegt sein.

In einer weiteren bevorzugten Ausführungsform der Erfindung sind zwei Parkbremsaktuatoren vorgesehen, wobei die Ansteuerung der Parkbremsaktuatoren auf die Steuereinheiten verteilt ist. Das heißt, die erste Steuereinheit ist dazu eingerichtet einen ersten Parkbremsaktuator anzusteuern und die zweite Steuereinheit ist dazu eingerichtet einen zweiten Parkbremsaktuator anzusteuern. Die bisherige Redundanz der Parkfunktion von Fahrzeugen mittels einer elektrischen Parkbremse und einer Sperre des Getriebes fällt somit weg und es besteht somit kein Zusatzaufwand, um diese im Antriebsstrang solcher Fahrzeuge zu realisieren.

Weitere Merkmale, Vorteile und Anwendungsmöglichen der Erfindung ergeben sich auch durch die nachfolgende Beschreibung von Ausführungsbeispielen und der Zeichnungen.
Figur 1 zeigt schematisch die hydraulische Architektur eines erfindungsgemäßen Bremssystems,
Figur 2 zeigt schematisch die elektronische Architektur eines erfindungsgemäßen Bremssystems einer ersten Ausführungsform,
Figur 3 zeigt schematisch die elektronische Architektur eines erfindungsgemäßen Bremssystems einer zweiten Ausführungsform,
Figur 4 zeigt ein Diagramm mit dem Anstieg des Verstärkungsfaktors,
Figur 5 zeigt ein Diagramm mit dem Abfallen des Aussteuerpunkts;

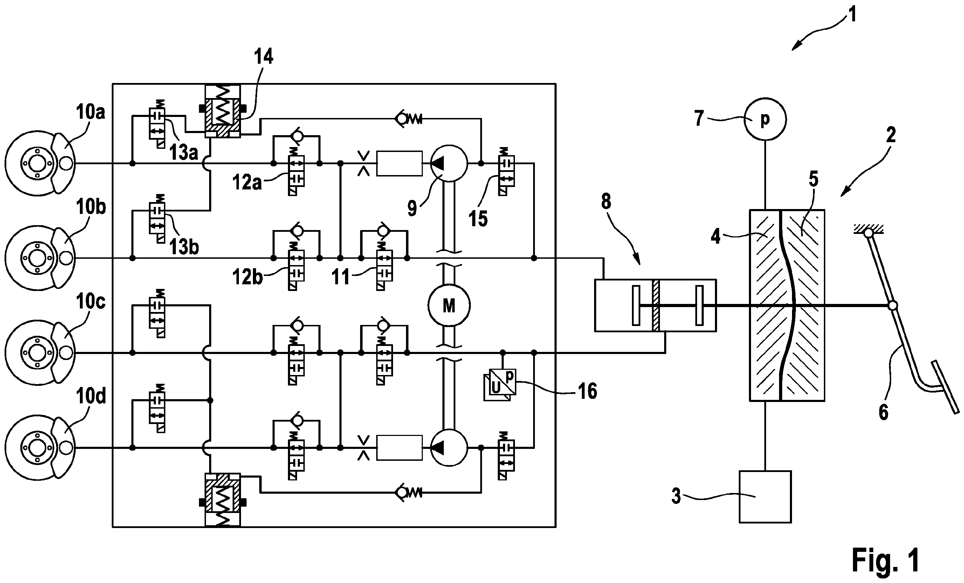

In Figur 1 ist ein erfindungsgemäßes hydraulisches Bremssystem 1 dargestellt mit einem Vakuumbremskraftverstärker 2, welcher von einer elektrischen Vakuumpumpe 3 versorgt wird. Der Vakuumbremskraftverstärker 2 weist eine Unterdruckkammer 4 und eine Arbeitskammer 5 auf, welche über eine Membran getrennt sind. Im Ruhezustand ist sowohl die Unterdruckkammer 4 als auch die Arbeitskammer 5 evakuiert und weisen somit einen Luftdruck kleiner als der Atmosphärendruck auf. Wird ein Bremspedal 6 durch einen Fahrer betätigt, so wird eine Bremskraft auf den Tandem-Hauptbremszylinder 8 ausgeübt. Gleichzeitig wird ein Ventil des Vakuumbremskraftverstärkers 2 geöffnet, sodass in die Arbeitskammer 5 Luft einströmen kann, wodurch ein Differenzdruck zwischen der Unterdruckkammer 4 und der Arbeitskammer 5 entsteht, welcher die Membran in Richtung des Hauptbremszylinders 8 drückt und somit eine Kraft auf den Hauptbremszylinder 8 ausübt. Beim Lösen des Bremspedals 6 wird das Außenventil geschlossen und ein Ventil zwischen der Unterdruckkammer 4 und der Arbeitskammer 5 geöffnet, wodurch diese über die Unterdruckkammer 4 durch die Vakuumpumpe 3 wieder evakuiert wird. Ein Vakuumsensor 7 detektiert den Luftdruck in der Unterdruckkammer 4, um die Vakuumpumpe 3 bei Bedarf zu aktivieren.

Die Hydraulik des hydraulischen Bremssystems 1 wird anhand des oberen Bremskreises nachfolgend erläutert. Dieser weist eine hydraulische Pumpe 9 auf, welche dazu eingerichtet ist, fahrerunabhängig Bremsdruck in den Radbremsen 10a und 10b aufzubauen. Die Radbremsen 10c und 10d werden äquivalent über den unteren Bremskreis versorgt, der im Wesentlichen identisch aufgebaut ist. Im Normalbetrieb wird der vom Tandem-Hauptbremszylinder 8 bereitgestellte Hydraulikdruck durch ein geöffnetes Hydraulikventil (Master Cylinder Isolation Valve - MCI) 11 und die geöffneten Einlassventile 12a und 12b direkt in die Radbremsen 10a und 10b geführt. Für einen fahrerunabhängigen Bremseingriff, wie er beispielsweise bei einem ESC-Eingriff initiiert wird, wird das Hydraulikventil (MCI) 11 geschlossen und stattdessen das Hydraulikventil (Low Pressure Feed Valve - LPF) 15 geöffnet. Nun kann die hydraulische Pumpe 9 Bremsflüssigkeit in Richtung der Radbremsen 10a und 10b fördern. Zur Durchführung einer Radschlupfregelung werden zumindest kurzfristig die Einlassventile 12a, 12b des Fahrzeugs geschlossen und stattdessen die Auslassventile 13a und 13b geöffnet, sodass der Bremsdruck in einen Niederdruckspeicher 14 abgebaut werden kann.

Erfindungsgemäß ist nun vorgesehen, dass bei einem Ausfall des Vakuumbremskraftverstärkers 2 oder dessen Ansteuerelektronik eine Bremskraftverstärkung durch die hydraulische Pumpe 9 durchgeführt wird.

Das ESC-Steuergerät misst dazu den Unterdruck in der Unterdruckkammer 4 des Vakuumbremskraftverstärkers 2 mittels des Vakuumsensors 7 und bestimmt daraus den Aussteuerpunkt des Vakuumbremskraftverstärkers 2, beispielsweise aus einer hinterlegten Kennlinie. Der Aussteuerpunkt ist dabei der größtmögliche durch den Vakuumbremskraftverstärker 2 erzeugbare Bremsdruck. Gleichzeitig wird der tatsächliche Bremsdruck mittels eines hydraulischen Drucksensors 16 bestimmt. Der hydraulische Drucksensor kann dabei im gleichen Bremskreis oder in einem anderen Bremskreis angeordnet sein, solang die beiden Bremskreise durch den gleichen Vakuumbremskraftverstärker betrieben werden. Ist der tatsächliche Hydraulikdruck 16 größer als der Aussteuerpunkt des Vakuumbremskraftverstärkers 2, so wird ein Teil der Bremskraft unverstärkt vom Fahrer mittels des Bremspedals 6 erzeugt. Um auch diesen Teil der Bremskraft zu verstärken, wird die Differenz des tatsächlichen Hydraulikdrucks und des Aussteuerpunkts bestimmt und mit einem Verstärkungsfaktor multipliziert. Der so ermittelte Verstärkungsdruck wird nun durch Ansteuerung der hydraulischen Pumpe 9 erzeugt. Fällt die Vakuumpumpe 3 aus, so steigt der Unterdruck in der Unterdruckkammer 4, insbesondere bei jeder Bremsung, langsam an, wodurch der Aussteuerpunkt sinkt, bis dieser sogar den Wert 0 erreicht. Es muss somit ein immer größerer Teil der Bremskraftverstärkung durch die hydraulische Pumpe aufgebracht werden. Ist der Aussteuerpunkt 0, wird bereits bei jeder minimalsten Bremspedalaktuierung die hydraulische Pumpe 9 aktiviert.

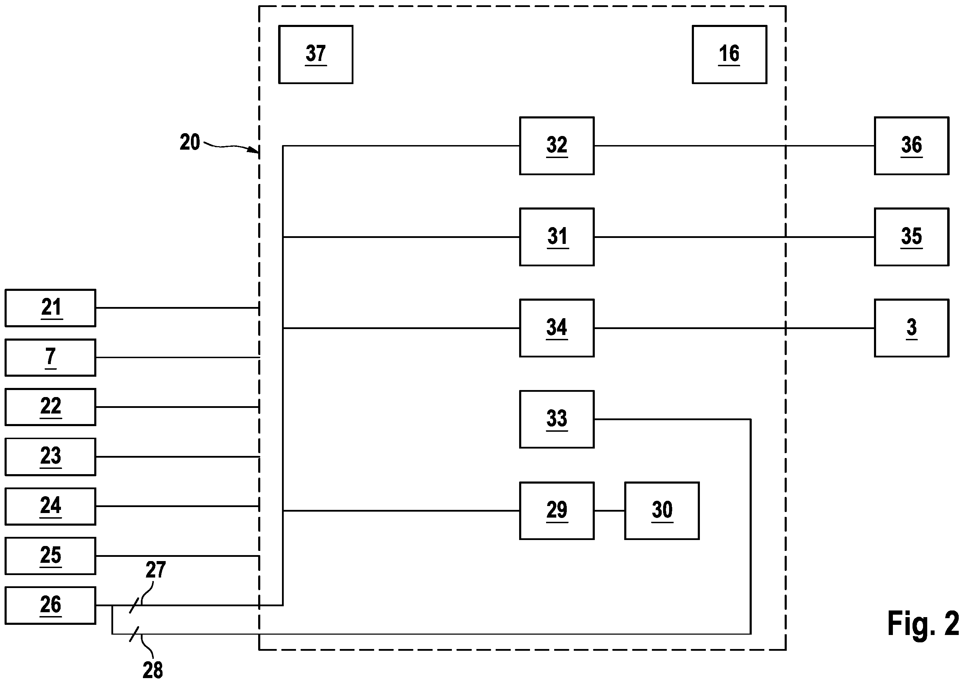

Figur 2 zeigt ein erfindungsgemäßes ESC-Steuergerät 20 mit einer eigenen Energieversorgung die eine Ground-Verbindung 21 und eine Stromversorgung 26 aufweist. Das ESC-Steuergerät 20 weist außerdem eine Verbindung zu dem Vakuumsensor 7, einem Bremspedal Wegsensor (PTS) 22 und einem Fahrzeugbus 23 auf. An das ESC-Steuergerät 20 ist außerdem ein Parkbremsschalter 24 angeschlossen und es werden die Raddrehzahlsignale 25 von vier Raddrehzahlsensoren an das ESC-Steuergerät 20 übermittelt. Die Stromversorgung 26 des ESC-Steuergeräts 20 weist eine erste Zuleitung 27 und eine zweite Zuleitung 28 auf. Die erste Zuleitung 27.dient zur Versorgung der Endstufen 29 der Hydraulikventile 30, der Endstufe 34 zur Ansteuerung der elektrischen Vakuumpumpe 3 als auch der Endstufen 31, 32 der Parkbremsaktuatoren 35, 36. Die zweite Zuleitung 28 versorgt einen Treiber 33 für die hydraulische Pumpe 9, welche Bremsdruck in dem hydraulischen Bremskreis zur Verfügung stellt. Außerdem ist ein integrierter Hydraulikdrucksensor 16 vorgesehen, um einen Hydraulikdruck in dem Bremssystem zu bestimmen. Ein Mikrocontroller 37 steuert alle Endstufen basierend auf den Sensorwerten gemäß der programmierten Betriebssoftware an.

Neben den standardmäßigen Schnittstellen und integrierten Sensoren des ESC-Systems weist das erfindungsgemäße ESC-Steuergerät ebenfalls die Anbindung des Vakuumsensors 7 auf. Dessen Signal ist maßgeblich für die Ansteuerung der elektrischen Vakuumpumpe 3 über den Vakuumpumpentreiber 34 (EVP Driver).

Außerdem ist in diesem Fall das ESC-System als ESC-Hybrid Variante ausgebildet, in der ein optionaler Bremspedalwegsensor 22 angeschlossen ist, der zur Realisierung der Funktionen für regeneratives Bremsen verwendet wird.

Die Ansteuerung der elektrischen Parkbremsaktuatoren 35, 36 ist ebenfalls auf dem ESC-Steuergerät 20 vorgesehen. Hierzu ist ein entsprechendes Bedienelement 24 mit dem ESC-Steuergerät 20 verbunden.

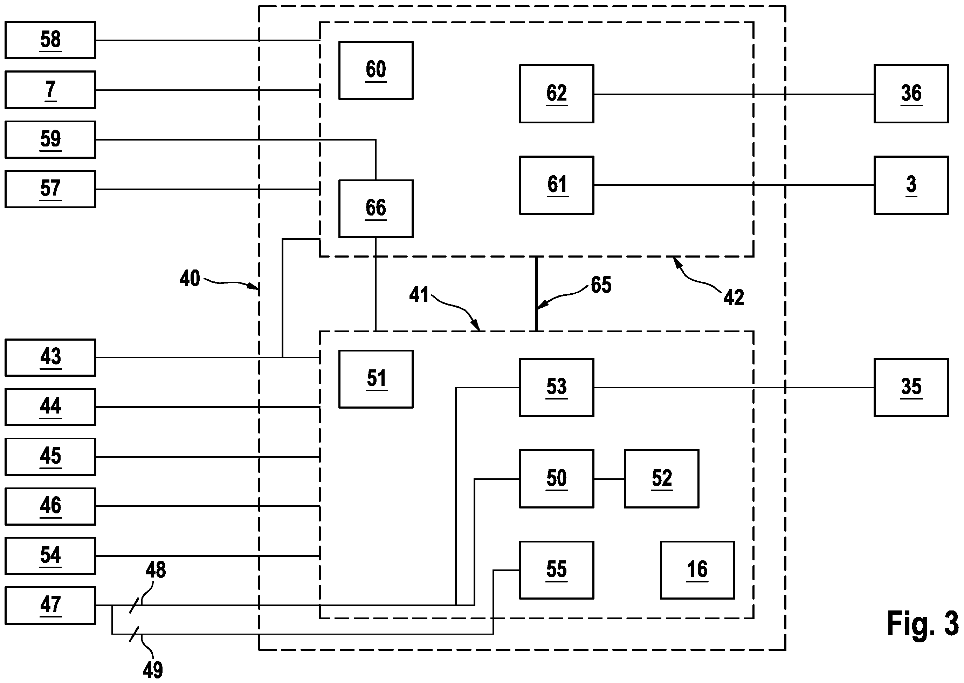

Figur 3 zeigt eine alternative Ausführungsform der Erfindung, bei dem das ESC-Steuergerät 40 mit zwei unabhängigen Steuereinheiten 41 und 42 ausgeführt ist, welche Untereinheiten des ESC-Steuergeräts 40 bilden. Die erste Steuereinheit 41 weist einen eigenen Ground-Anschluss 54 auf und verfügt über eine Verbindung mit dem Fahrzeugbus 43, um mit anderen Steuergeräten und Einheiten des Fahrzeugs kommunizieren zu können. Die Daten eines Bremspedalwegsensors 44 werden ebenfalls der ersten Steuereinheit 41 zur Verfügung gestellt. Ein Parkbremsschalter 45 sowie zwei Raddrehzahlsensoren 46 sind mit der ersten Steuereinheit 41 verbunden. Die erste Steuereinheit 41 weist eine Stromversorgung 47 auf, welche über zwei Zuleitungen 48, 49 verfügt. Die erste Zuleitung 48 dient zur Versorgung der Endstufen 50 und der zugeordneten Ventilspulen 52 sowie der Endstufe 53 eines elektrischen Parkbremsaktuators 35. Die zweite Zuleitung 49 versorgt die Endstufe 55 für die hydraulische Pumpe 9. Ein Mikrocontroller 51 erhält die Daten der angeschlossenen Sensoren sowie der eines integrierten hydraulischen Drucksensors 16 und steuert basierend auf den Daten die Endstufe 55 der hydraulischen Pumpe 9 sowie die Endstufe 50 der Hydraulikventile 52 und die Endstufe 53 eines Parkbremsaktuators 35 an.

Die zweite Steuereinheit 42 verfügt über eine eigene Stromversorgung 58 und über einen eigenen Ground-Anschluss 57. Außerdem ist die zweite Steuereinheit 42 mit dem Vakuumsensor 7 und zwei Raddrehzahlsensoren 59 verbunden. Die zweite Steuereinheit 42 weist eine eigene Recheneinheit 60 auf. Der eigene Mikrocontroller 60 steuert die Endstufe 61 für die Vakuumpumpe 3 an. Außerdem wird über den Mikrocontroller 60 die Endstufe 62 eines Parkbremsaktuators 36 angesteuert. In dieser Ausführungsvariante, ist das ESC-System mit elektrischer Redundanz ausgestattet. Hierbei handelt es sich um ein dual-logic System. Neben einer üblichen ersten elektronischen Steuereinheit 41, mit dem Mikrorechner 51, ist eine zweite Steuereinheit 42, mit dem zweiten Mikrorechner 60 vorgesehen. Die erste und zweite Steuereinheit 41, 42 verfügen jeweils über eigene Schaltungsmodule zur Erfassung der jeweils erforderlichen Sensoren und zur Ansteuerung der Aktuatoren über entsprechende Endstufen.

Die elektronischen Bauteile des ersten und zweiten Steuergerätes 41, 42 können entweder auf einer gemeinsamen Leiterplatte (PCB), zwei getrennten Leiterplatten oder auch Vorder- und Rückseite einer Leiterplatte angeordnet sein.

Im Normalbetrieb, d.h. bei fehlerfreiem System arbeiten beide Steuereinheiten 41, 42 gleichzeitig und es findet ein Datenaustausch zwischen beiden Steuereinheiten 41, 42 statt. Hierzu dient ein interner Datenbus 65.

Bei Ausfall einer Steuereinheit 41, 42 arbeitet die jeweils andere Steuereinheit 42, 41 weiter. Der Ausfall einer Steuereinheit 41, 42 wird durch Diagnosefunktionen dieser Steuereinheit 41, 42 erkannt und über den internen Datenbus 65 der jeweils anderen Steuereinheit 42, 41 mitgeteilt. Bei Totalausfall, etwa des Mikrorechners 60, 51 oder der Spannungsversorgung 47, 58 einer Steuereinheit 41, 42 erkennt dies die jeweils andere Steuereinheit 42, 41 über das Ausbleiben von Kommunikationssignalen über den internen Datenbus 65.

Auf den Steuereinheiten 41, 42 sind jeweils ein Teil der Funktionen des Steuergeräts 40 implementiert. Die erste Steuereinheit 41 steuert die elektrohydraulischen Aktuatoren (hydraulische Pumpe 9, Hydraulikventile 11, 15, 12, 13) des Bremssystems 1. Auf diesem Steuergerät 41 sind auch alle Fahrzeugregelunktionen wie eine Antischlupfregelung (ABS) ein Stabilitätsprogramm (ESP) und andere implementiert. Die erste Steuereinheit 41 enthält auch den integrierten hydraulischen Drucksensor 16 sowie optional die Sensorik zur Erfassung von Gierrate und Längs-/Querbeschleunigung für die ESC Funktionen. In einer ESC-Hybrid Variante wird auch der Bremspedal Wegsensor 44 auf der ersten Steuereinheit 41 verarbeitet und die regenerative Bremsfunktion dort ausgeführt.

Die zweite Steuereinheit 42 umfasst die Funktion der Unterdruckversorgung. Hierzu wird das Signal des Vakuumsensors 7, vorzugsweise eines redundanten Sensors mit digitaler Schnittstelle, von der zweiten Steuereinheit 42 verarbeitet. Die in der zweiten Steuereinheit 42 implementierte Steuerungssoftware wertet dieses Signal aus, um die elektrische Vakuumpumpe 3 anzusteuern. Optional können weitere Signale, die die erste Steuereinheit 41 über den internen Datenbus 65 bereitstellt, in die Ansteuerstrategie der elektrischen Vakuumpumpe 3 einbezogen werden. Bei Ausfall der ersten Steuereinheit 41 kann die Ansteuerung der elektrischen Vakuumpumpe 3 jedoch auch ohne diese Zusatzsignale vorgenommen werden. Die elektrischen Baugruppen zur Ansteuerung der elektrischen Vakuumpumpe 3 sind auf der zweiten Steuereinheit 42 angeordnet.

Die Bremskraftverstärkung erfolgt im Normalbetrieb durch die durch die zweite Steuereinheit 42 realisierte Unterdruckversorgung mittels der elektrischen Vakuumpumpe 3. Die erste Steuereinheit 41 ist hierfür nicht erforderlich. Demzufolge bleibt die Funktion der Bremskraftverstärkung auch bei einem Fehler oder Ausfall der ersten Steuereinheit 41 erhalten.

Tritt ein Fehler der zweiten Steuereinheit 42 auf, der die Sensierung des Unterdrucks verhindert oder fällt der Vakuumsensor 7 selbst aus, kann eine in der Steuerungssoftware dieser Steuereinheit 42 implementierte Rückfallebene aktiviert werden. Beispielsweise kann die elektrische Vakuumpumpe 3 in diesem Fall immer während einer Bremsung und für eine gewisse Zeit nach Ende jeder Bremsung angesteuert werden. Das Vorliegen einer Bremsung wird dabei von der anderen Steuereinheit 41 mit Hilfe des integrierten hydraulischen Drucksensors 16 erkannt und über den internen Datenbus 65 an die Steuereinheit 42 gemeldet.

Tritt jedoch ein Fehler der zweiten Steuereinheit 42 auf, der die Ansteuerung der elektrischen Vakuumpumpe 3 verhindert, oder fällt die Steuereinheit 42 vollständig aus, übernimmt die andere Steuereinheit 41 die Funktion der Bremskraftverstärkung mit Hilfe des elektrohydraulischen Aktuators, also der hydraulischen Pumpe 9 und durch entsprechende Steuerung der Hydraulikventile 11, 12, 13, 15.

Dabei wird der vom Fahrer durch die Pedalbetätigung erzeugte hydraulische Druck im Hauptbremszylinder 8 mit Hilfe des integrierten hydraulischen Drucksensors 16 gemessen und mit dem Aussteuerpunkt des Vakuumbremskraftverstärkers 2 verglichen. Die positive Abweichung von Hauptbremszylinderdruck und Aussteuerdruck wird mit einem Verstärkungsfaktor gewichtet und als zusätzlicher Verstärkungsdruck in den Radbremskreisen aufgebaut. Handelt es sich um eine ESC-Hybrid Variante, bei der ein Pedalwegsensor 44 an die erste Steuereinheit 41 angeschlossen ist, kann dessen Signal optional zusätzlich in die Bestimmung des Verstärkungsdrucks einbezogen werden.

Die Berechnung des Aussteuerpunkts erfolgt hierbei nach unterschiedlichen Methoden, in Abhängigkeit des vorliegenden Fehlers der zweiten Steuereinheit 42. Bei Ausfall der Ansteuerung der elektrischen Vakuumpumpe 3 durch die Steuereinheit 42 oder eines Fehlers der elektrischen Vakuumpumpe 3 selbst oder einer gravierenden Unterdruckleckage, steht das Signal des Vakuumsensors 7 noch zur Verfügung, da es über den internen Datenbus 65 übertragen wird. Somit kann der Aussteuerdruck anhand einer charakteristischen Kennlinie des Vakuumbremskraftverstärkers 2, die in der Steuereinheit 41 abgelegt ist, berechnet werden. Da bei den angenommenen Fehlerfällen keine erneute Evakuierung des Vakuumbremskraftverstärkers mehr erfolgt, wird der Unterdruck sich mit jeder Bremsung dem Umgebungsdruck annähern, d.h. der Aussteuerpunkt wird bis auf null fallen. Ist dieser Zustand erreicht, setzt die hydraulische Bremskraftverstärkung schon bei geringer Bremspedalbetätigung ein.

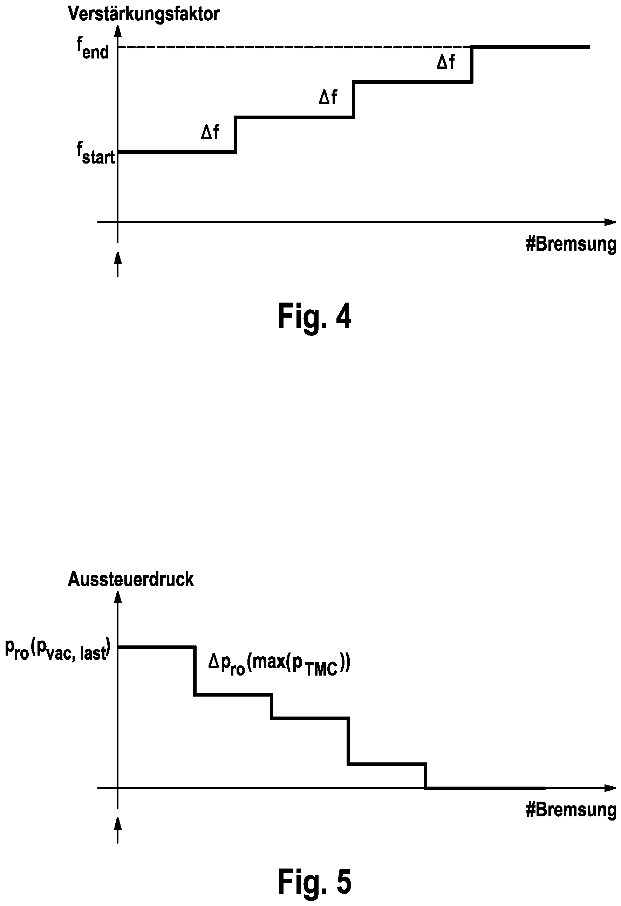

Liegt hingegen ein vollständiger Ausfall der zweiten Steuereinheit 42 vor, steht keine Unterdruckinformation mehr zur Verfügung. In diesem Fall muss in der Steuerungssoftware der ersten Steuereinheit 41 eine entsprechende Rückfallstrategie hinterlegt sein. Ein möglicher Realisierungsansatz dieser Rückfallstrategie ist, dass von einem Aussteuerdruck von 0 bar, also von einem Totalausfall des Unterdrucks, ausgegangen wird. Gleichzeitig wird jedoch der Verstärkungsfaktor reduziert, so dass keine doppelte Bremskraftverstärkung einsetzt, solange der Unterdruck sich tatsächlich noch nicht dem Umgebungsdruck angenähert hat. Zusätzlich kann der Verstärkungsfaktor nach einer vorbestimmten Zahl von Bremsungen wieder auf den normalen Wert angehoben werden. Dies ist in dem Diagramm der Fig. 4 dargestellt. Am Ende jeder Bremsung wird der Verstärkungsfaktor um einen kleinen Wert angehoben, bis der Normalwert wieder erreicht ist. Dies trägt der Tatsache Rechnung, dass sich bei jeder Bremsung der Unterdruck etwas mehr dem Umgebungsdruck anpasst und der Aussteuerpunkt somit sinkt. Alternativ wird dazu basierend auf dem letzten bekannten Wert des Vakuumsensors ein Aussteuerpunkt bestimmt und ein Unterdruckmodell in der Software der Steuereinheit 41 gerechnet, das bei jeder Bremsung einen "Unterdruckverbrauch" und damit das Abfallen des Aussteuerdrucks schätzt, wie beispielhaft in der Fig. 5 dargestellt ist. In Abhängigkeit des maximalen Bremsdrucks, welcher bei einer Bremsung vorgelegen hat, wird die Änderung des Aussteuerpunkts für jede Bremsung errechnet und der Aussteuerpunkt entsprechend angepasst, bis dieser den Wert 0 erreicht hat.

Die Ansteuerung der elektrischen Parkbremsen 35, 36 erfolgt im Normalbetrieb gemeinsam von beiden Steuereinheiten 41 und 42, die jeweils über die Ansteuerelektronik 53, 62 für zumindest einen Parkbremsaktuator 35, 36 verfügen.

Beim Ausfall einer der Einheiten erfolgt die Parkbremsansteuerung nur noch durch die verbleibende Einheit, ggf. wird also nur noch ein Parkbremsaktuator 35, 36 betätigt. Damit ist die Forderung nach einer eingeschränkten Stillstandssicherung bei einem elektrischen Einfachfehler erfüllt und es besteht keine Notwendigkeit einer Stillstandssicherung mit Hilfe einer Getriebesperre.

Die üblichen Funktionen des sogenannten Stillstandsmanagements (u.a. statisches Spannen und Lösen der Parkbremse bei Betätigung des Bedienelements 45 der elektrischen Parkbremse, automatisches Spannen bei Verlassen des Fahrzeugs, automatisches Lösen beim Anfahren, usw.) sind in der Steuerungssoftware der ersten Steuereinheit 41 implementiert. Die Ansteuerung des elektrisch der zweiten Steuereinheit 42 zugeordneten Parkbremsaktuators 36 erfolgt von der ersten Steuereinheit 41 durch Absetzen eines Ansteuerbefehls an die zweite Einheit 42 über den internen Datenbus 65.

Bei Ausfall der ersten Steuereinheit 41 aktiviert die zweite Steuereinheit 42 eine Rückfallebene des Stillstandsmanagements und betätigt dann nur noch den elektrisch der zweiten Steuereinheit 42 zugeordneten Parkbremsaktuator 36.

Um sicherzustellen, dass das Zuspannen dieses Parkbremsaktuators 36 nur bei stehendem Fahrzeug bzw. im stillstandsnahen Bereich erfolgt, werden mindestens zwei Raddrehzahlsensorsignale 59 von der zweiten Steuereineheit 42 verarbeitet. Im Normalbetrieb, d.h. bei fehlerfreiem System werden diese Signale jedoch über eine Umschaltvorrichtung 66, die Bestandteil der zweiten Steuereinheit 42 ist, an die erste Steuereinheit 41 weitergegeben und dort verarbeitet.

Da bei Ausfall der ersten Steuereinheit 41 das Signal des Bedienelements 45 der elektrischen Parkbremse nicht mehr zur Verfügung steht, ist vorgesehen, die zweite Steuereinheit 42 ebenfalls an den Fahrzeugbus 43 anzuschließen. Somit kann in dieser Rückfallebene ein Befehl zum Zuspannen und Lösen des Parkbremsaktuators 36 empfangen werden. Dieses Signal kann außerhalb der Systemgrenzen des Bremssystems 1 generiert werden. Beispielsweise kann die Parkstellung des Wählhebels einer Automatikschaltung hierzu verwendet werden.

Der Aspekt der elektrischen Redundanz ist bei der erfindungsgemäßen Bremssystemarchitektur auch auf die Spannungsversorgung ausgedehnt. Die Versorgung der ersten Steuereinheit 41 ist über zwei abgesicherte Zuleitungen 48, 49 umgesetzt. Zusätzlich ist eine unabhängig abgesicherte Zuleitung 58 zur Versorgung der zweiten Steuereinheit 42 vorgesehen. Hierbei kann die Zuleitung 58 als eine weitere Zuleitung aus dem üblichen Energiebordnetz des Fahrzeugs ausgebildet ein. Es ist jedoch auch möglich, die Zuleitung 58 mit einem unabhängigen Bordnetz zu verbinden.

Auch die Masseanbindung 54, 57 ist doppelt vorgesehen, d.h. eine erste Masseleitung 54 bindet die erste Steuereinheit 41 an und eine zweite Masseleitung 57 bindet die zweite Steuereinheit 42 an. Aufgrund der gemeinsamen Signalverarbeitung, etwa der BUS-Signale 43, werden beide Masseleitungen 54, 57 innerhalb des Steuergerätes verbunden. Um den Abriss einer der Masseleitungen 54, 57 und damit den Redundanzverlust zu erkennen, ist ein entsprechendes Schaltungsmodul vorgesehen.

Fehlermodi der Steuereinheiten 41 und 42 werden über Statussignale, vorzugsweise BUS-Signale an die Partnersysteme des Steuergerätes kommuniziert, so dass dem Fahrer entsprechende Warnsignale (Warnlampen und -meldungen) angezeigt werden können. Insbesondere wird so die degradierte (weil auf einen Parkbremsaktuator reduzierte) Funktion der Stillstandssicherung aber auch die Degradation der Betriebsbremsfunktion angezeigt.

Sofern durch die Grundauslegung des Bremssystems sichergestellt ist, dass auch bei einem Totalausfall beider Steuereinheiten 41, 42 bzw. deren Spannungsversorgungen 47, 58 die Hilfsbremswirkung nach ECE R13 H (2,44 m/s² bei einer Pedalkraft von 500N) erreicht wird, ist im Einfachfehlerfall (Fehler einer der beiden Einheiten 41, 42 oder einer Zuleitung) nur eine "gelbe" Bremsenwarnlampe bzw. eine Displaymeldung erforderlich, da durch die Funktion nur einer der beiden Einheiten das Erreichen der Betriebsbremswirkung (6,43 m/s² bei einer Pedalkraft von 500N) gewährleistet ist.

Das erfindungsgemäße hydraulische Bremssystem erfüllt somit die Anforderungen elektrifizierter Fahrzeuge mit geringen Mehrkosten gegenüber konventionellen Bremssystemen. Es nutzt dazu die kostengünstige und bewährte Technik der Vakuumbremskraftverstärkung und umfasst eine vom Fahrzeugantrieb unabhängige Vakuumversorgung mit Hilfe einer elektrischen Vakuumpumpe.

### Bezugszeichenliste

- 1: hydraulisches Bremssystem
- 2: Vakuumbremskraftverstärker
- 3: Vakuumpumpe
- 4: Unterdruckkammer
- 5: Arbeitskammer
- 6: Bremspedal
- 7: Vakuumsensor
- 8: Tandem-Hauptbremszylinder
- 9: Hydraulische Pumpe
- 10: a-d Radbremsen
- 11: Hydraulikventil MCI
- 12: a-d Einlassventile
- 13: a-d Auslassventile
- 14: Niederdruckspeicher
- 15: Hydraulikventil LPF
- 16: Hydraulischer Drucksensor
- 20: ESC-Steuergerät
- 21: Ground-Verbindung
- 22: Bremspedal Wegsensor
- 23: Fahrzeugbus
- 24: Parkbremsschalter
- 25: Raddrehzahlsensoren
- 26: Stromversorgung
- 27: Erste Zuleitung
- 28: Zweite Zuleitung
- 29: Endstufe Ventile
- 30: Hydraulikventile (Gesamtheit der Ventile 11, 12, 13, 15)
- 31: Endstufe Parkbremse
- 32: Endstufe Parkbremse
- 33: Endstufe hydraulische Pumpe
- 34: Endstufe Vakuumpumpe
- 35: Erster Parkbremsaktuator
- 36: Zweiter Parkbremsaktuator
- 37: Mikrocontroller
- 40: ESC-Steuergerät
- 41: Erste Steuereinheit
- 42: Zweite Steuereinheit
- 43: Fahrzeugbus
- 44: Bremspedalwegsensor
- 45: Parkbremsschalter
- 46: Raddrehzahlsensor
- 47: Stromversorgung
- 48: Erste Zuleitung
- 49: Zweite Zuleitung
- 50: PCU ESC
- 51: Mikrocontroller
- 52: Hydraulikventile (Gesamtheit der Ventile 11, 12, 13, 15)
- 53: Endstufe Parkbremse
- 54: Ground-Verbindung
- 55: Endstufe hydraulische Pumpe
- 57: Ground-Verbindung
- 58: Stromversorgung
- 59: Raddrehzahlsensoren
- 60: Mikrocontroller
- 61: Treiber für Vakuumpumpe
- 62: Endstufe Parkbremse
- 65: Interner Datenbus
- 66: Umschaltvorrichtung für Raddrehzahlsensoren

## Patentansprüche

1. Hydraulisches Bremssystem aufweisend einen Vakuumbremskraftverstärker (2), ein ESC-System mit einer hydraulischen Pumpe (9) zur radindividuellen Bremskrafterzeugung in mehreren Radbremsen (10a-d), einem ESC-Steuergerät (20, 40) zur Ansteuerung der hydraulischen Pumpe (9) sowie einen hydraulischen Drucksensor (16) zur Ermittlung eines Hydraulikdrucks in dem hydraulischen Bremssystem (1), wobei eine elektrische Vakuumpumpe (3) zur Versorgung des Vakuumbremskraftverstärkers (2) vorgesehen ist, wobei das ESC-Steuergerät (20, 40) dazu eingerichtet ist, die elektrische Vakuumpumpe (3) zu regeln und elektrisch anzusteuern und das ESC-Steuergerät (40) zwei Steuereinheiten (41, 42) mit je einem eigenem Prozessor (51, 60) aufweist, wobei die beiden Steuereinheiten (41, 42) dazu eingerichtet sind, in einem Normalbetrieb je einen Teil der Funktionen des ESC-Steuergeräts (40) auszuführen, wobei im Fehlerfall einer Steuereinheit (41, 42), zumindest ein Teil derer jeweiligen Funktionen von der jeweils anderen Steuereinheit (41, 42) übernommen werden **dadurch gekennzeichnet, dass** im Normalbetrieb auf einer ersten Steuereinheit (41) die Funktionen zur Radschlupfregelung und/oder eines Stabilitätsprogramms implementiert sind mit der Ansteuerung der hydraulischen Pumpe (9), der Hydraulikventile (52), der Erfassung des hydraulischen Drucksensors (16) und/oder der Erfassung von Gierraten- und Beschleunigungssensoren.

2. Hydraulisches Bremssystem nach Anspruch 1, **dadurch gekennzeichnet, dass** im Normalbetrieb auf einer zweiten Steuereinheit (42) die Funktionen zur Ansteuerung der Vakuumpumpe (3) implementiert sind.

3. Hydraulisches Bremssystem nach einem der vorhergehenden Ansprüche, **dadurch gekennzeichnet, dass** der Vakuumbremskraftverstärker (2) einen Vakuumsensor (7) aufweist, welcher mit dem ESC-Steuergerät (20, 40), insbesondere der zweiten Steuereinheit (42), verbunden ist, wobei das ESC-Steuergerät (20, 40), insbesondere die zweite Steuereinheit (42), dazu eingerichtet ist, die Vakuumpumpe (3) basierend auf den Daten des Vakuumsensors (7) anzusteuern.

4. Hydraulisches Bremssystem nach Anspruch 3, **dadurch gekennzeichnet, dass** die zweite Steuereinheit (42) dazu eingerichtet ist, bei Ausfall der Funktionen zur Erfassung des Vakuumsensors (7), bei Vorliegen einer Bremsung die Vakuumpumpe (3), insbesondere mit einer vorgegebenen Nachlaufzeit, zu aktivieren, wobei die erste Steuereinheit (41) dazu eingerichtet ist, das Vorliegen einer Bremsung durch Auswertung der Daten des hydraulischen Drucksensors (16) festzustellen und über eine Kommunikationsverbindung (65) an die zweite Steuereinheit (42) zu übermitteln.

5. Hydraulisches Bremssystem nach einem der vorhergehenden Ansprüche, **dadurch gekennzeichnet, dass** das ESC-Steuergerät (20, 40), insbesondere die erste Steuereinheit (41), dazu eingerichtet ist, bei Ausfall der Vakuumpumpe (3) und/oder der zweiten Steuereinheit (42) eine Bremskraftverstärkung mittels der hydraulischen Pumpe (9) durchzuführen.

6. Hydraulisches Bremssystem nach einem der Ansprüche 3 bis 5, **dadurch gekennzeichnet, dass** das ESC-Steuergerät (20, 40) dazu eingerichtet ist, einen Aussteuerpunkt des Vakuumbremskraftverstärkers (2) aus Daten des Vakuumsensors (7) zu ermitteln und eine Erschöpfung des Vakuumbremskraftverstärkers (2) daran zu erkennen, wenn der Hydraulikdruck größer ist, als der Aussteuerpunkt und bei Erschöpfung eine Bremskraftverstärkung mittels der hydraulischen Pumpe (9) durchzuführen.

7. Hydraulisches Bremssystem nach Anspruch 6, **dadurch gekennzeichnet, dass** das ESC-Steuergerät (20, 40) dazu eingerichtet ist zur Bremskraftverstärkung einen Verstärkungsdruck mittels der hydraulischen Pumpe (9) zu erzeugen, wobei der Verstärkungsdruck aus der Differenz zwischen Hydraulikdruck und Aussteuerpunkt multipliziert mit einem Verstärkungsfaktor berechnet wird.

8. Hydraulisches Bremssystem nach Anspruch 7, **dadurch gekennzeichnet, dass** das ESC-Steuergerät (20, 40) dazu eingerichtet ist, bei Ausfall des Vakuumsensors (7) und der Vakuumpumpe (3) den Wert des Aussteuerdrucks zur Bestimmung des Verstärkungsdrucks auf 0 bar zu setzen, wobei ein Verstärkungsfaktor verwendet wird, der kleiner ist als der Verstärkungsfaktor bei bekanntem Aussteuerpunkt.

9. Hydraulisches Bremssystem nach Anspruch 8, **dadurch gekennzeichnet, dass** das ESC-Steuergerät (20, 40) dazu eingerichtet ist, bei einer Bremsung den Verstärkungsfaktor anzuheben, bis der Ursprungswert wieder erreicht ist.

10. Hydraulisches Bremssystem nach Anspruch 7, **dadurch gekennzeichnet, dass** das ESC-Steuergerät (20, 40) dazu eingerichtet ist bei Ausfall des Vakuumsensors (7) und der Vakuumpumpe (3) den Wert des Aussteuerdrucks zur Bestimmung des Verstärkungsdrucks aus dem letzten bekannten Messwert des Vakuumsensors(7) zu bestimmen, wobei bei jeder Bremsung eine Abnahme des Aussteuerpunkts anhand des in dieser Bremsung maximal erreichten Hydraulikdrucks berechnet wird und der Aussteuerpunkt entsprechend reduziert wird.

11. Hydraulisches Bremssystem nach einem der vorhergehenden Ansprüche, **dadurch gekennzeichnet, dass** zwei Parkbremsaktuatoren (35, 36), vorgesehen sind, wobei die erste Steuereinheit (41) dazu eingerichtet ist, zumindest einen ersten Parkbremsaktuator (35) anzusteuern und die zweite Steuereinheit (42) dazu eingerichtet ist, zumindest einen zweiten Parkbremsaktuator (36) anzusteuern.

## Claims

1. Hydraulic braking system having a vacuum brake booster (2), an ESC system with a hydraulic pump (9) for generating braking force in a wheel-specific manner in a plurality of wheel brakes (10a-d), an ESC control device (20, 40) for driving the hydraulic pump (9) and a hydraulic pressure sensor (16) for determining a hydraulic pressure in the hydraulic braking system (1), wherein an electric vacuum pump (3) is provided for supplying the vacuum brake booster (2), wherein the ESC control device (20, 40) is designed to control and electrically drive the electric vacuum pump (3) and the ESC control device (40) has two control units (41, 42), each with its own processor (51, 60), wherein the two control units (41, 42) are designed to each perform some of the functions of the ESC control device (40) during normal operation, wherein, in the event of a fault in a control unit (41, 42), at least some of its respective functions are taken over by the respective other control unit (41, 42), **characterized in that** the functions for wheel slip control and/or a stability program are implemented on a first control unit (41) during normal operation, including driving of the hydraulic pump (9), the hydraulic valves (52), detection of the hydraulic pressure sensor (16) and/or detection of yaw rate and acceleration sensors

2. Hydraulic braking system according to Claim 1, **characterized in that** the functions for driving the vacuum pump (3) are implemented on a second control unit (42) during normal operation.

3. Hydraulic braking system according to either of the preceding claims, **characterized in that** the vacuum brake booster (2) has a vacuum sensor (7) which is connected to the ESC control device (20, 40), in particular the second control unit (42), wherein the ESC control device (20, 40), in particular the second control unit (42), is designed to drive the vacuum pump (3) based on the data from the vacuum sensor (7).

4. Hydraulic braking system according to Claim 3, **characterized in that** the second control unit (42) is designed to activate the vacuum pump (3), in particular with a specified run-on time, if the functions for detecting the vacuum sensor (7) fail and braking occurs, wherein the first control unit (41) is designed to establish braking occurring by evaluating the data from the hydraulic pressure sensor (16) and to transmit this information to the second control unit (42) via a communication link (65).

5. Hydraulic braking system according to one of the preceding claims, **characterized in that** the ESC control device (20, 40), in particular the first control unit (41), is designed to carry out brake boosting by means of the hydraulic pump (9) if the vacuum pump (3) and/or the second control unit (42) fail/fails.

6. Hydraulic braking system according to one of Claims 3 to 5, **characterized in that** the ESC control device (20, 40) is designed to determine a run-out point of the vacuum brake booster (2) from data from the vacuum sensor (7) and to identify exhaustion of the vacuum brake booster (2) when the hydraulic pressure is greater than the run-out point and to carry out brake boosting by means of the hydraulic pump (9) in the event of exhaustion.

7. Hydraulic braking system according to Claim 6, **characterized in that** the ESC control device (20, 40) is designed to generate a boost pressure by means of the hydraulic pump (9) for the purpose of brake boosting, wherein the boost pressure is calculated from the difference between the hydraulic pressure and the run-out point multiplied by a boost factor.

8. Hydraulic braking system according to Claim 7, **characterized in that** the ESC control device (20, 40) is designed to set the value of the run-out pressure for determining the boost pressure to 0 bar if the vacuum sensor (7) and the vacuum pump (3) fail, wherein a boost factor is used that is smaller than the boost factor for a known run-out point.

9. Hydraulic braking system according to Claim 8, **characterized in that** the ESC control device (20, 40) is designed to increase the boost factor during braking, until the original value is reached again.

10. Hydraulic braking system according to Claim 7, **characterized in that** the ESC control device (20, 40) is designed to determine the value of the run-out pressure for determining the boost pressure from the last known measured value from the vacuum sensor (7) if the vacuum sensor (7) and the vacuum pump (3) fail, wherein, in the case of each braking operation, a decrease in the run-out point is calculated on the basis of the maximum hydraulic pressure reached during this braking operation and the run-out point is accordingly reduced.

11. Hydraulic braking system according to one of the preceding claims, **characterized in that** two parking brake actuators (35, 36) are provided, wherein the first control unit (41) is designed to drive at least one first parking brake actuator (35) and the second control unit (42) is designed to drive at least one second parking brake actuator (36).

## Revendications

1. Système de freinage hydraulique comportant un servofrein à dépression (2), un système ESC comprenant une pompe hydraulique (9) pour générer une force de freinage individuelle pour chaque roue dans plusieurs freins de roue (10a-d), un appareil de commande d'ESC (20, 40) servant à commander la pompe hydraulique (9), ainsi qu'un capteur de pression hydraulique (16) servant à déterminer une pression hydraulique dans le système de freinage hydraulique (1), une pompe à dépression électrique (3) étant prévue pour alimenter le servofrein à dépression (2), l'appareil de commande d'ESC (20, 40) étant conçu pour réguler et commander électriquement la pompe à dépression électrique (3) et l'appareil de commande d'ESC (40) comportant deux unités de commande (41, 42) comprenant chacune son propre processeur (51, 60), les deux unités de commande (41, 42) étant conçues pour exécuter chacune une partie des fonctions de l'appareil de commande d'ESC (40) en fonctionnement normal, dans lequel, lors d'une défaillance d'une unité de commande (41, 42), au moins une partie de ses fonctions respectives est prise en charge par l'autre unité de commande (41, 42) respective, **caractérisé en ce qu'**en fonctionnement normal, les fonctions de régulation du patinage des roues et/ou d'un programme de stabilité sont mises en oeuvre sur une première unité de commande (41) en association avec la commande de la pompe hydraulique (9), des soupapes hydrauliques (52), l'acquisition provenant du capteur de pression hydraulique (16) et/ou l'acquisition provenant des capteurs de taux de lacet et d'accélération.

2. Système de freinage hydraulique selon la revendication 1, **caractérisé en ce qu'**en fonctionnement normal, les fonctions servant à commander la pompe à dépression (3) sont mises en oeuvre sur une seconde unité de commande (42).

3. Système de freinage hydraulique selon l'une des revendications précédentes, **caractérisé en ce que** le servofrein à dépression (2) comporte un capteur de dépression (7) qui est relié à l'appareil de commande d'ESC (20, 40), notamment à la seconde unité de commande (42), l'appareil de commande d'ESC (20, 40), notamment la seconde unité de commande (42), étant conçu pour commander la pompe à dépression (3) sur la base des données du capteur de dépression (7).

4. Système de freinage hydraulique selon la revendication 3, **caractérisé en ce que** la seconde unité de commande (42) est conçue pour activer la pompe à dépression (3), notamment avec un temps d'arrêt prédéfini, lors d'une défaillance des fonctions d'acquisition du capteur de dépression (7), la première unité de commande (41) étant conçue pour constater l'existence d'un freinage par analyse des données du capteur de pression hydraulique (16) et pour le transmettre à la seconde unité de commande (42) par l'intermédiaire d'une liaison de communication (65).

5. Système de freinage hydraulique selon l'une des revendications précédentes, **caractérisé en ce que** l'appareil de commande d'ESC (20, 40), notamment la première unité de commande (41), est conçu pour effectuer une assistance au freinage au moyen de la pompe hydraulique (9) lors d'une défaillance de la pompe à dépression (3) et/ou de la seconde unité de commande (42).

6. Système de freinage hydraulique selon l'une des revendications 3 à 5, **caractérisé en ce que** l'appareil de commande d'ESC (20, 40) est conçu pour déterminer un point de réglage du servofrein à dépression (2) à partir de données du capteur de dépression (7) et pour détecter une fatigue du servofrein à dépression (2) lorsque la pression hydraulique est supérieure au point de réglage et pour effectuer une assistance au freinage au moyen de la pompe hydraulique (9) en cas de fatigue.

7. Système de freinage hydraulique selon la revendication 6, **caractérisé en ce que** l'appareil de commande d'ESC (20, 40) est conçu pour générer une pression d'assistance pour l'assistance au freinage au moyen de la pompe hydraulique (9), la pression d'assistance étant calculée à partir de la différence entre la pression hydraulique et le point de réglage multiplié par un facteur d'amplification.

8. Système de freinage hydraulique selon la revendication 7, **caractérisé en ce que** l'appareil de commande d'ESC (20, 40) est conçu, lors d'une défaillance du capteur de dépression (7) et de la pompe à dépression (3), pour régler la valeur de la pression de commande à 0 bar afin de déterminer la pression d'assistance, le facteur d'assistance utilisé étant inférieur au facteur d'assistance en vigueur lorsque le point de réglage est connu.

9. Système de freinage hydraulique selon la revendication 8, **caractérisé en ce que** l'appareil de commande d'ESC (20, 40) est conçu pour augmenter le facteur d'assistance lors d'un freinage jusqu'à ce que la valeur initiale soit à nouveau atteinte.

10. Système de freinage hydraulique selon la revendication 7, **caractérisé en ce que** l'appareil de commande d'ESC (20, 40) est conçu pour déterminer, lors d'une défaillance du capteur de dépression (7) et de la pompe à dépression (3), la valeur de la pression de réglage afin de terminer la pression d'assistance à partir de la dernière valeur de mesure connue du capteur de dépression (7), dans lequel, à chaque freinage, une diminution du point de réglage est calculée sur la base de la pression hydraulique maximale atteinte lors de ce freinage et le point de réglage est réduit de manière correspondante.

11. Système de freinage hydraulique selon l'une des revendications précédentes, **caractérisé en ce qu'**il est prévu deux actionneurs de frein de stationnement (35, 36), la première unité de commande (41) étant conçue pour commander au moins un premier actionneur de frein de stationnement (35) et la seconde unité de commande (42) étant conçue pour commander au moins un second actionneur de frein de stationnement (36).
